# EUROPEAN PATENT APPLICATION

(11) **EP 4 052 888 A1**
(43) Date of publication of application: **07.09.2022**
(21) Application number: 22154297.0
(22) Date of filing: 31.01.2022
(51) Int. Cl.: B29C 65/36, B23K 13/01

(54) **INDUCTION WELDER AND INDUCTION WELDING METHOD**

(30) Priority: 29.01.2021 US 202117162678
(71) Applicant: Rohr, Inc., Chula Vista, CA 91910-2098 (US)
(72) Inventor: van TOOREN, Michael, San Diego, 92122 (US)
(74) Representative: Dehns

(57) **Abstract**

An induction welder (20) is provided that includes a first lead (28), a second lead (30) and an induction welding coil (32). The induction welding coil (32) is electrically coupled with the first lead (28) and the second lead (30). The induction welding coil (32) is configured as or otherwise includes a conductive element (58). This conductive element (58) is configured into at least a plurality of loops (62A, 62B) arranged within a common plane.

## Description

### BACKGROUND

### 1. Technical Field

This disclosure relates generally to joining bodies together and, more particularly, to induction welding.

### 2. Background Information

It is known in the art to join discrete bodies together using induction welding. These joined bodies are typically constructed from like materials; e.g., metal or fiber-reinforced composite. The discrete bodies are induction welded together using an induction welder. Various types and configurations of induction welders are known in the art. While these known induction welders have various benefits, there is still room in the art for improvement. For example, there is a need in the art for an induction welder and method that can provide a wider, more robust weld seam between the joined bodies, particularly where the bodies are constructed from fiber reinforced thermoplastic material.

### SUMMARY OF THE DISCLOSURE

According to an aspect of the present disclosure, an induction welder is provided that includes a first lead, a second lead and an induction welding coil. The induction welding coil is electrically coupled with the first lead and the second lead. The induction welding coil is configured as or otherwise includes a conductive element. This conductive element is configured into at least a plurality of loops arranged within a common plane.

According to another aspect of the present disclosure, another induction welded is provided that includes a first lead, a second lead and an induction welding coil. The induction welding coil is electrically coupled with the first lead and the second lead. The induction welding coil is configured as or otherwise includes a conductive element. An entirety of at least a portion of the conductive element lies along a plane. The portion of the conductive element includes a plurality of first segments and a plurality of second segments. The first segments are parallel with one another. The second segments are parallel with one another. Each of the second segments is angularly offset from each of the first segments.

According to still another aspect of the present disclosure, a manufacturing method is provided during which a first thermoplastic body is arranged with a second thermoplastic body. At least one of the first thermoplastic body or the second thermoplastic body includes a plurality of fibers embedded within a thermoplastic matrix. The fibers include a plurality of parallel first fibers and a plurality of parallel second fibers that are angularly offset from the parallel first fibers. A conductive element is arranged next to a surface of the first thermoplastic body. The first thermoplastic body is induction welded to the second thermoplastic body using the conductive element. The conductive element includes a first segment and a second segment. The first segment is at least substantially parallel with the parallel first fibers. The second segment is at least substantially parallel with the parallel second fibers.

The following optional features may be applied to any of the above aspects:
The first segment may be perpendicular to the second segment.

The conductive element may be configured into at least a plurality of loops arranged within a common plane that is at least substantially parallel with the surface.

Each of the second segments may be perpendicular to each of the first segments.

The first segments may include at least three of the first segments. In addition or alternatively, the second segments may include at least three of the second segments.

The first lead may be configured as or otherwise include a first lead tube. The second lead may be configured as or otherwise include a second lead tube. The conductive element may be configured as or otherwise include a coil tube connected to and extending between the first lead tube and the second lead tube.

The first lead tube may have a first width. The second lead tube may have a second width. The coil tube may have a third width. The third width may be smaller than the first width and/or the second width.

A cooling device may be included that is configured to flow cooling fluid sequentially through the first lead tube, the coil tube and the second lead tube.

The loops may include a first loop and a second loop. The second loop may be arranged next to the first loop within the common plane.

The first loop may be connected to the second loop by a bridge segment of the conductive element that is arranged within the common plane.

A first (or each) of the loops may have a polygonal shape.

An entirety of at least a portion of the conductive element may be arranged within the common plane. The portion of the conductive element may include a plurality of first segments and a plurality of second segments. The first segments may be parallel with one another. The second segments may be parallel with one another. Each of the second segments may be angularly offset from each of the first segments.

A first of the loops may include a first coil first segment, a first coil second segment, a first coil third segment and a first coil fourth segment. The first coil first segment may electrically couple the first lead with the first coil second segment. The first coil second segment may extend between and may be angularly offset from the first coil first segment and the first coil third segment. The first coil third segment may be between and may be connected to the first coil second segment and the first coil fourth segment. The first coil fourth segment may be angularly offset from the first coil third segment.

The first coil first segment may be parallel with the first coil third segment. In addition or alternatively, the first coil second segment may be parallel with the first coil fourth segment.

A length of the first coil first segment may be less than a length of the first coil third segment. In addition or alternatively, a length of the first coil second segment may be less than a length of the first coil fourth segment.

A second of the loops may include a second coil first segment, a second coil second segment, a second coil third segment and a second coil fourth segment. The second coil first segment may electrically couple the second lead with the second coil second segment. The second coil second segment may extend between and may be angularly offset from the second coil first segment and the second coil third segment. The second coil third segment may be between and may be connected to the second coil second segment and the second coil fourth segment. The second coil fourth segment may be angularly offset from the second coil third segment. A bridge segment may connect the first coil fourth segment to the second coil fourth segment.

The bridge segment may be between and may be next to the first coil first segment and the second coil first segment.

A power source may be included and electrically coupled with the first lead and the second lead.

The plane / common plane may be a flat plane. Alternatively, the plane / common plane may be a non-flat plane.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is an illustration of an induction welder.
FIG. 2 is a cross-sectional illustration of a first lead of the induction welder.
FIG. 3 is a cross-sectional illustration of a second lead of the induction welder.
FIG. 4 is an illustration of an induction welding coil of the induction welder.
FIG. 5 is a cross-sectional illustration of the induction welding coil.
FIG. 6 is an enlarged view of a first loop portion of the induction welding coil.
FIG. 7 is an enlarged view of a second loop portion of the induction welding coil.
FIG. 8 is a flow diagram of a method for manufacturing a component.
FIG. 9 is an illustration of an aircraft propulsion system with certain hidden features shown by dashed lines.
FIG. 10 is an illustration of a portion of a first body with fiber reinforcement within a thermoplastic matrix.
FIG. 11 is an illustration of a portion of a second body with fiber reinforcement within a thermoplastic matrix.
FIG. 12 is an illustration of a portion of the second body arranged below the first body with the fiber reinforcement of the second body shown by dashed lines.
FIG. 13 is a sectional illustration of the first and the second bodies taken along line 13-13 in FIG. 12.
FIG. 14 is an illustration of a portion of the induction welding coil arranged with the first and the second bodies.
FIG. 15 is a sectional illustration of the induction welding coil, the first body and the second body taken along line 15-15 in FIG. 14.
FIG. 16 is an illustration of a prior art induction welding coil adjacent a body.
FIG. 17 is an illustration of a flat common plane.
FIG. 18 is an illustration of a non-flat common plane.
FIG. 19 is an illustration of two planes that intersect at an interruption such as a corner.

### DETAILED DESCRIPTION

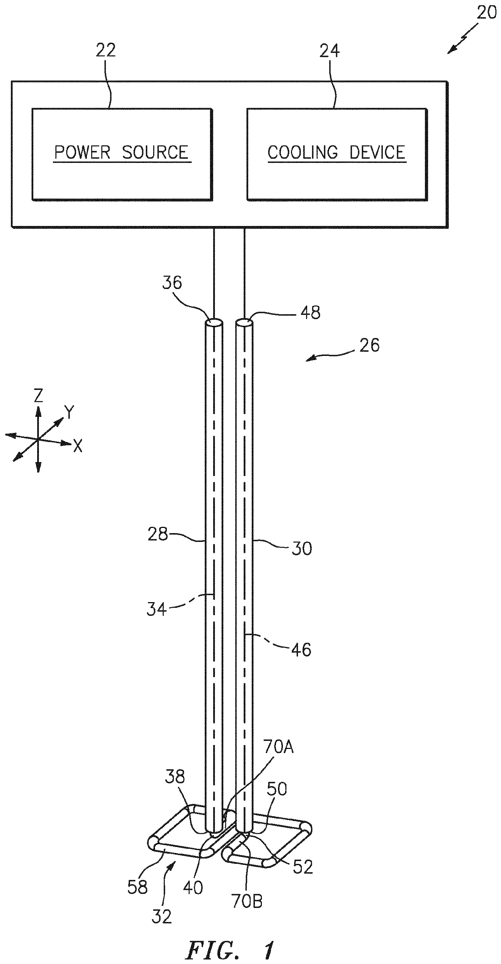

FIG. 1 illustrates an induction welder 20. This induction welder 20 is configured to induction weld two or more components together, which components may be thermoplastic components or any other type of induction weldable components. The induction welder 20 of FIG. 1 includes a power source 22, a cooling device 24 and an induction coil assembly 26.

The power source 22 is configured to generate a periodic electrical current. The power source 22, for example, may be configured as a high-frequency current source. The power source 22 may be or otherwise include an alternating current (AC) generator, transformer, amplifier, etc. Alternatively, the power source 22 may include a direct current (DC) generator, transformer, amplifier, battery, etc. electrically coupled with an oscillator. The present disclosure, however, is not limited to such exemplary power sources.

The cooling device 24 is configured to flow fluid (e.g., coolant) through the induction coil assembly 26. The cooling device 24, for example, may be configured as a liquid pump coupled with a coolant reservoir and a heat exchanger. The present disclosure, however, is not limited to such an exemplary cooling device.

The induction coil assembly 26 of FIG. 1 includes an electrical first lead 28, an electrical second lead 30 and an induction welding coil 32. The first lead 28 may be configured as an electrically conductive first lead tube. The first lead 28 of FIG. 1, for example, is configured as or otherwise includes a length of hollow tubing constructed from electrically conductive material such as metal; e.g., copper (Cu).

The first lead 28 extends along a (e.g., straight) centerline 34 between a first end 36 of the first lead 28 and an opposing, second end 38 of the first lead 28. The first lead first end 36 is electrically coupled with the power source 22 and fluidly coupled with the cooling device 24. The first lead second end 38 is electrically and/or fluidly coupled with a first end 40 of the induction welding coil 32.

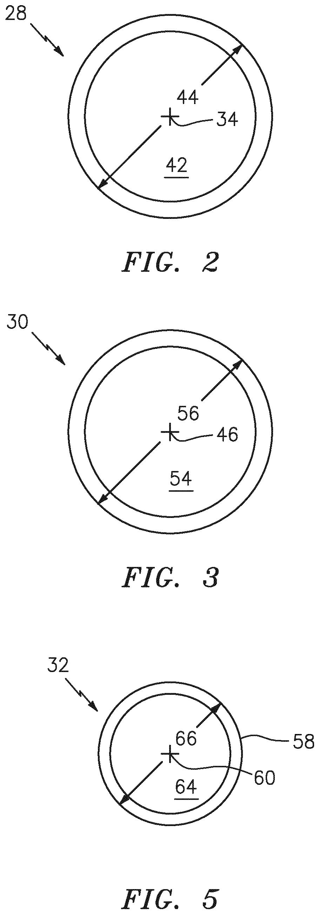

Referring to FIG. 2, the first lead 28 has an internal bore 42. This first lead bore 42 extends completely through the first lead 28 along its centerline 34 between the first lead first end 36 and the first lead second end 38 (see FIG. 1). The first lead 28 has a (e.g., constant and/or maximum) width 44; e.g., a diameter or a major axis dimension.

Referring to FIG. 1, the second lead 30 may be configured as an electrically conductive second lead tube. The second lead 30 of FIG. 1, for example, is configured as or otherwise includes a length of hollow tubing constructed from electrically conductive material such as metal; e.g., copper (Cu). This second lead material may be the same as (or different than) the first lead material.

The second lead 30 extends along a (e.g., straight) centerline 46 between a first end 48 of the second lead 30 and an opposing, second end 50 of the second lead 30. The second lead centerline 46 may (or may not) be parallel with the first lead centerline 34. The second lead first end 48 is electrically coupled with the power source 22 and fluidly coupled with the cooling device 24. The second lead second end 50 is electrically and/or fluidly coupled with a second end 52 of the induction welding coil 32.

Referring to FIG. 3, the second lead 30 has an internal bore 54. This second lead bore 54 extends completely through the second lead 30 along its centerline 46 between the second lead first end 48 and the second lead second end 50 (see FIG. 1). The second lead 30 has a (e.g., constant and/or maximum) width 56; e.g., a diameter or a major axis dimension. This second lead width 56 may be equal to the first lead width 44 (see FIG. 2). In other embodiments, however, the second lead width 56 may be different than the first lead width 44.

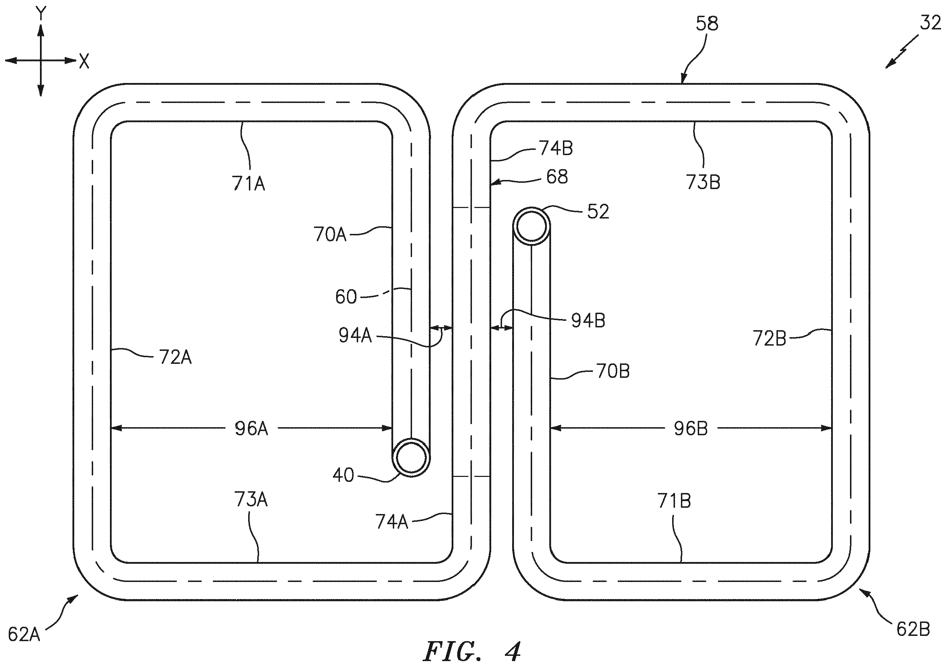

Referring to FIG. 4, the induction welding coil 32 may be configured as or otherwise includes an electrically conductive element 58 such as a formed, tortuous electrically conductive coil tube. The induction welding coil 32 of FIG. 4, for example, is configured as or otherwise includes a length of hollow tubing constructed from electrically conductive material such as metal; e.g., copper (Cu). The induction welding coil material may be the same as (or different than) the first lead material and/or the second lead material.

The induction welding coil 32 extends along a non-straight, tortuous (e.g., squared figure-eight shaped, serpentine shaped, etc.) centerline 60 between the coil first end 40 and the coil second end 52. The induction welding coil 32 of FIG. 4, for example, is configured into at least a plurality of loops 62A and 62B (generally referred to as "62"). These coil loops 62 are arranged within and/or lie along a (e.g., flat or curved) common plane; e.g., the plane of FIG. 4.

Referring to FIG. 5, the induction welding coil 32 has an internal bore 64. This coil bore 64 extends completely through the induction welding coil 32 along its centerline 60 between the coil first end 40 and the coil second end 52 (see FIG. 4). The coil bore 64 is thereby fluidly coupled with the first lead bore 42 (see FIG. 2) and the second lead bore 54 (see FIG. 3). The induction welding coil 32 has a (e.g., constant and/or maximum) width 66; e.g., a diameter or a major axis dimension. This coil width 66 is different (e.g., less than) than the first lead width 44 (see FIG. 2) and/or the second lead width 56 (see FIG. 3). Sizing the coil width 66 to be smaller than the first lead width 44 and/or the second lead width 56 may facilitate locating material of the induction welding coil 32 closer to bodies to be welded, while facilitating increased fluid cooling for the first lead 28 and/or the second lead 30. In other embodiments, however, the coil width 66 may be equal to the first lead width 44 and/or the second lead width 56.

Referring to FIG. 4, the coil loops 62 (e.g., only or at least) include a first loop 62A and a second loop 62B that is arranged longitudinally (along an x-axis) next to the first loop 62A within and/or along the plane. The second loop 62B is connected to the first loop 62A by a bridge segment 68 of the conductive element 58, which bridge segment 68 is also arranged within and/or lies along the plane.

Each of the coil loops 62 may have a polygonal shape such as, but not limited to, a rectangular shape or a square shape. This polygonal shape may have exterior rounded corners as shown in FIG. 4. Such rounded corners may facilitate a smooth transition (e.g., a smooth corner bend of the coil tube) from one side of the shape (e.g., segment of the coil tube) to another side of the shape (e.g., segment of the coil tube). In other embodiments, however, the polygonal shape may have exterior sharp corners.

An entirety of at least a portion (or all) of the conductive element 58 is arranged in and/or along the plane. This at least a portion (or all) of the conductive element 58 includes a plurality of first segments (e.g., coil tube segments 68, 70A, 72A, 70B and 72B) and a plurality of second segments (e.g., coil tube segments 71A, 73A, 71B and 73B). The first segments of FIG. 4 are substantially (e.g., +/- 1° or 2°) or completely parallel with one another. Similarly, the second segments of FIG. 4 are substantially (e.g., +/- 1° or 2°) or completely parallel with one another. The second segments, however, are non-parallel with the first segments. Each of the second segments of FIG. 4, for example, is substantially (e.g., +/- 1° or 2°) or completely perpendicular to each of the first segments.

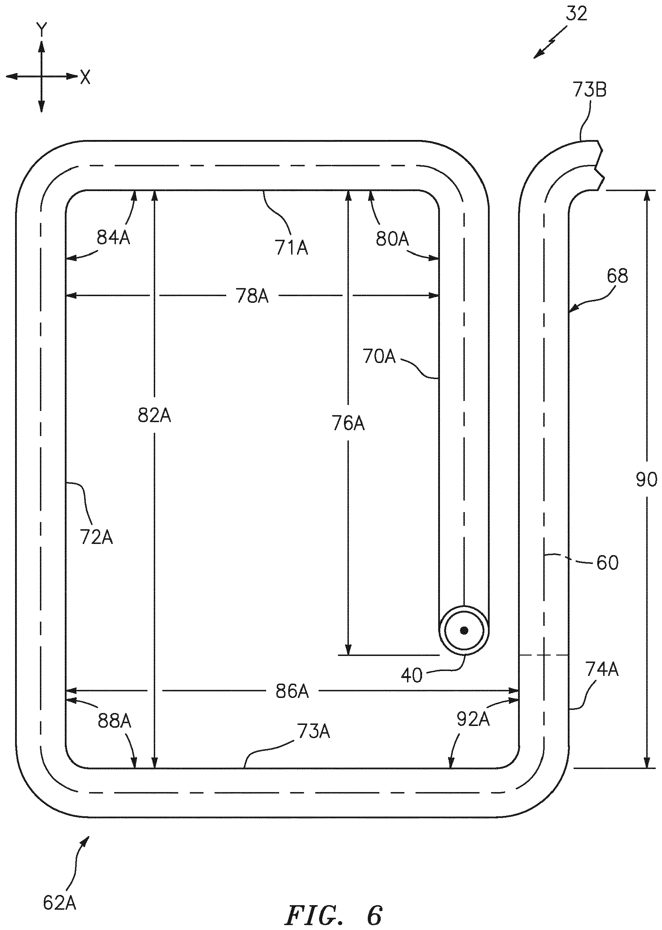

The first loop 62A of FIG. 6 includes the first coil first segment 70A, the first coil second segment 71A, the first coil third segment 72A and the first coil fourth segment 73A. The first loop 62A may also include a first portion 74A of the bridge segment 68.

The first coil first segment 70A electrically and/or fluidly couples the first lead 28 (see FIG. 1) with the first coil second segment 71A. The first coil first segment 70A of FIG. 6, for example, extends along a portion of the coil centerline 60 between and is connected to the first lead 28 (see FIG. 1) and the first coil second segment 71A. The first coil first segment portion of the coil centerline 60 may be straight such that at least a substantial portion (e.g., 70%, 80%, 90% or more) or an entirety of the first coil first segment 70A is a straight segment of the conductive element 58. The first coil first segment 70A has a length 76A extending (e.g., laterally and/or along a y-axis) from the first lead 28 (see FIG. 1) to the first coil second segment 71A. Referring to FIG. 1, the first lead 28 is angularly offset from the first coil first segment 70A by an angle; e.g., a right angle, or alternatively an acute angle or an obtuse angle. This angle of FIG. 1, for example, is a right angle such that the first lead 28 is perpendicular to the first coil first segment 70A and the plane.

Referring to FIG. 6, the first coil second segment 71A electrically and/or fluidly couples the first coil first segment 70A with the first coil third segment 72A. The first coil second segment 71A of FIG. 6, for example, extends along a portion of the coil centerline 60 between and is connected to the first coil first segment 70A and the first coil third segment 72A. The first coil second segment portion of the coil centerline 60 may be straight such that at least a substantial portion (e.g., 70%, 80%, 90% or more) or an entirety of the first coil second segment 71A is a straight segment of the conductive element 58. The first coil second segment 71A has a length 78A extending (e.g., longitudinally and/or along the x-axis) from the first coil first segment 70A to the first coil third segment 72A. The first coil second segment 71A is angularly offset from the first coil first segment 70A by an angle 80A; e.g., a right angle, or alternatively an acute angle or an obtuse angle. The angle 80A of FIG. 6, for example, is a right angle such that the first coil second segment 71A is perpendicular to the first coil first segment 70A within and/or along the plane.

The first coil third segment 72A electrically and/or fluidly couples the first coil second segment 71A with the first coil fourth segment 73A. The first coil third segment 72A of FIG. 6, for example, extends along a portion of the coil centerline 60 between and is connected to the first coil second segment 71A and the first coil fourth segment 73A. The first coil third segment portion of the coil centerline 60 may be straight such that at least a substantial portion (e.g., 70%, 80%, 90% or more) or an entirety of the first coil third segment 72A is a straight segment of the conductive element 58. The first coil third segment 72A has a length 82A extending (e.g., laterally and/or along the y-axis) from the first coil second segment 71A to the first coil fourth segment 73A. This first coil third segment length 82A of FIG. 6 is greater than the first coil first segment length 76A. The first coil third segment 72A is angularly offset from the first coil second segment 71A by an angle 84A; e.g., a right angle, or alternatively an acute angle or an obtuse angle. The angle 84A of FIG. 6, for example, is a right angle such that the first coil third segment 72A is perpendicular to the first coil second segment 71A within and/or along the plane.

The first coil fourth segment 73A electrically and/or fluidly couples the first coil third segment 72A with the bridge segment 68. The first coil fourth segment 73A of FIG. 6, for example, extends along a portion of the coil centerline 60 between and is connected to the first coil third segment 72A and the first portion 74A of the bridge segment 68. The first coil fourth segment portion of the coil centerline 60 may be straight such that at least a substantial portion (e.g., 70%, 80%, 90% or more) or an entirety of the first coil fourth segment 73A is a straight segment of the conductive element 58. The first coil fourth segment 73A has a length 86A extending (e.g., longitudinally and/or along the x-axis) from the first coil third segment 72A to the bridge segment 68. This first coil fourth segment length 86A of FIG. 6 is greater than the first coil second segment length 78A. The first coil fourth segment 73A is angularly offset from the first coil third segment 72A by an angle 88A; e.g., a right angle, or alternatively an acute angle or an obtuse angle. The angle 88A of FIG. 6, for example, is a right angle such that the first coil fourth segment 73A is perpendicular to the first coil third segment 72A within and/or along the plane.

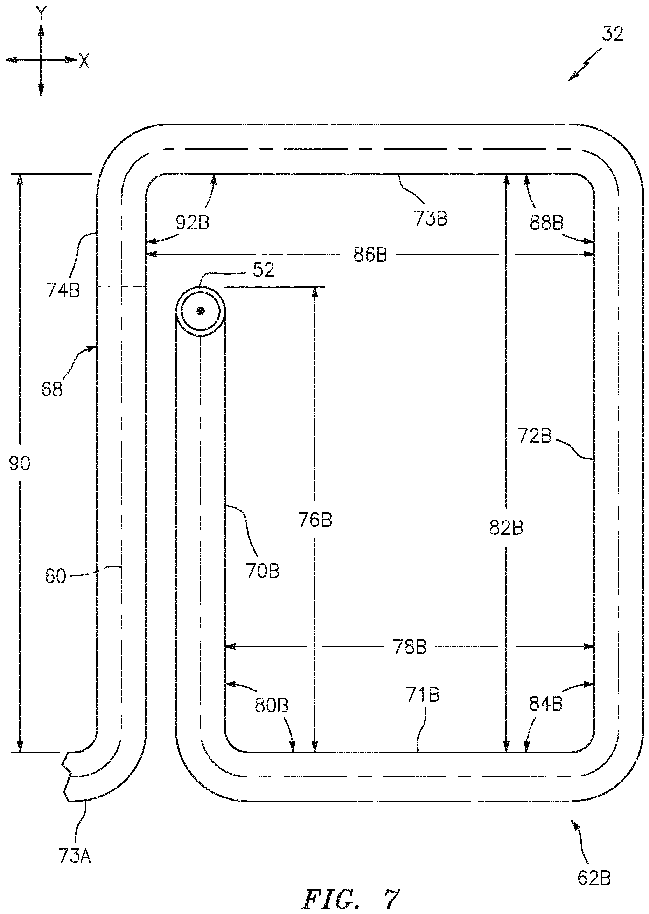

The second loop 62B of FIG. 7 includes the second coil first segment 70B, the second coil second segment 71B, the second coil third segment 72B and the second coil fourth segment 73B. The second loop 62B may also include a second portion 74B of the bridge segment 68.

The second coil first segment 70B electrically and/or fluidly couples the second lead 30 (see FIG. 1) with the second coil second segment 71B. The second coil first segment 70B of FIG. 7, for example, extends along a portion of the coil centerline 60 between and is connected to the second lead 30 (see FIG. 1) and the second coil second segment 71B. The second coil first segment portion of the coil centerline 60 may be straight such that at least a substantial portion (e.g., 70%, 80%, 90% or more) or an entirety of the second coil first segment 70B is a straight segment of the conductive element 58. The second coil first segment 70B has a length 76B extending (e.g., laterally and/or along the y-axis) from the second lead 30 (see FIG. 1) to the second coil second segment 71B. Referring to FIG. 1, the second lead 30 is angularly offset from the second coil first segment 70B by an angle; e.g., a right angle, or alternatively an acute angle or an obtuse angle. This angle of FIG. 1, for example, is a right angle such that the second lead 30 is perpendicular to the second coil first segment 70B and the plane.

Referring to FIG. 7, the second coil second segment 71B electrically and/or fluidly couples the second coil first segment 70B with the second coil third segment 72B. The second coil second segment 71B of FIG. 7, for example, extends along a portion of the coil centerline 60 between and is connected to the second coil first segment 70B and the second coil third segment 72B. The second coil second segment portion of the coil centerline 60 may be straight such that at least a substantial portion (e.g., 70%, 80%, 90% or more) or an entirety of the second coil second segment 71B is a straight segment of the conductive element 58. The second coil second segment 71B has a length 78B extending (e.g., longitudinally and/or along the x-axis) from the second coil first segment 70B to the second coil third segment 72B. The second coil second segment 71B is angularly offset from the second coil first segment 70B by an angle 80B; e.g., a right angle, or alternatively an acute angle or an obtuse angle. The angle 80B of FIG. 7, for example, is a right angle such that the second coil second segment 71B is perpendicular to the second coil first segment 70B within and/or along the plane.

The second coil third segment 72B electrically and/or fluidly couples the second coil second segment 71B with the second coil fourth segment 73B. The second coil third segment 72B of FIG. 7, for example, extends along a portion of the coil centerline 60 between and is connected to the second coil second segment 71B and the second coil fourth segment 73B. The second coil third segment portion of the coil centerline 60 may be straight such that at least a substantial portion (e.g., 70%, 80%, 90% or more) or an entirety of the second coil third segment 72B is a straight segment of the conductive element 58. The second coil third segment 72B has a length 82B extending (e.g., laterally and/or along the y-axis) from the second coil second segment 71B to the second coil fourth segment 73B. This second coil third segment length 82B of FIG. 7 is greater than the second coil first segment length 76B. The second coil third segment 72B is angularly offset from the second coil second segment 71B by an angle 84B; e.g., a right angle, or alternatively an acute angle or an obtuse angle. The angle 84B of FIG. 7, for example, is a right angle such that the second coil third segment 72B is perpendicular to the second coil second segment 71B within and/or along the plane.

The second coil fourth segment 73B electrically and/or fluidly couples the second coil third segment 72B with the bridge segment 68. The second coil fourth segment 73B of FIG. 7, for example, extends along a portion of the coil centerline 60 between and is connected to the second coil third segment 72B and the second portion 74B of the bridge segment 68. The second coil fourth segment portion of the coil centerline 60 may be straight such that at least a substantial portion (e.g., 70%, 80%, 90% or more) or an entirety of the second coil fourth segment 73B is a straight segment of the conductive element 58. The second coil fourth segment 73B has a length 86B extending (e.g., longitudinally and/or along the x-axis) from the second coil third segment 72B to the bridge segment 68. This second coil fourth segment length 86B of FIG. 7 is greater than the second coil second segment length 78B. The second coil fourth segment 73B is angularly offset from the second coil third segment 72B by an angle 88B; e.g., a right angle, or alternatively an acute angle or an obtuse angle. The angle 88B of FIG. 7, for example, is a right angle such that the second coil fourth segment 73B is perpendicular to the second coil third segment 72B within and/or along the plane.

The bridge segment 68 electrically and/or fluidly couples the first loop 62A with the second loop 62B. The bridge segment 68 of FIG. 7, for example, extends along a portion of the coil centerline 60 between and is connected to the first coil fourth segment 73A and the second coil fourth segment 73B. The bridge segment portion of the coil centerline 60 may be straight such that at least a substantial portion (e.g., 70%, 80%, 90% or more) or an entirety of the bridge segment 68 is a straight segment of the conductive element 58. The bridge segment 68 has a length 90 extending (e.g., longitudinally and/or along the x-axis) from the first coil fourth segment 73A to the second coil fourth segment 73B. This bridge segment length 90 of FIG. 7 is equal to the second coil third segment length 82B and the first coil third segment length 82A (see FIG. 6). Referring to FIG. 6, the bridge segment 68 is angularly offset from the first coil fourth segment 73A by an angle 92A; e.g., a right angle, or alternatively an acute angle or an obtuse angle. The angle 92A of FIG. 6, for example, is a right angle such that the bridge segment 68 is perpendicular to the first coil fourth segment 73A within and/or along the plane. Referring to FIG. 7, the bridge segment 68 is also angularly offset from the second coil fourth segment 73B by an angle 92B; e.g., a right angle, or alternatively an acute angle or an obtuse angle. The angle 92B of FIG. 7, for example, is a right angle such that the bridge segment 68 is perpendicular to the second coil fourth segment 73B within and/or along the plane.

Referring to FIG. 4, the bridge segment 68 is arranged next to (e.g., directly neighbors) and is (e.g., longitudinally) between the first loop 62A and the second loop 62B. More particularly, the bridge segment 68 is arranged next to and is (e.g., longitudinally) between the first coil first segment 70A and the second coil first segment 70B within and/or along the plane. The bridge segment 68 of FIG. 4 is also arranged parallel with the first coil first segment 70A and/or the second coil first segment 70B.

The bridge segment 68 is separated from the first coil first segment 70A by a first longitudinal distance 94A (e.g., along the x-axis) and is separated from the second coil first segment 70B by a second longitudinal distance 94B (e.g., along the x-axis). The second longitudinal distance 94B of FIG. 4 is equal to the first longitudinal distance 94A.

The first coil first segment 70A is separated from the first coil third segment 72A by a third longitudinal distance 96A (e.g., along the x-axis). The third longitudinal distance 96A of FIG. 4 is greater than the first longitudinal distance 94A; e.g., the distance 96A is at least five, ten or twenty times the distance 94A. With such an arrangement, a gap between the segments 70A and 72A may be significantly larger than a gap between the segments 68 and 70A.

The second coil first segment 70B is separated from the second coil third segment 72B by a fourth longitudinal distance 96B (e.g., along the x-axis). The fourth longitudinal distance 96B of FIG. 4 is greater than the second longitudinal distance 94B; e.g., the distance 96B is at least five, ten or twenty times the distance 94B. With such an arrangement, a gap between the segments 70B and 72B may be significantly larger than a gap between the segments 68 and 70B.

While the induction welding coil 32 is described above having a particular configuration, the present disclosure is not limited to such an exemplary configuration. For example, in other embodiments, one or more of the coil loops 62 may each include one or more additional (e.g., straight) segments of the conductive element 58. One or more of the coil loops 62 may also or alternatively omit one or more of the conductive element segments described above. Furthermore, while each of the conductive element segments 70A and 70B (generally referred to as "70"), 71A and 71B (generally referred to as "71"), 72A and 72B (generally referred to as "72"), 73A and 73B (generally referred to as "73") is generally described as having substantially or completely straight configurations, one or more of these conductive element segments 70, 71, 72 and/or 73 may alternatively have another (e.g., a non-straight, a curved, etc.) configuration in other embodiments.

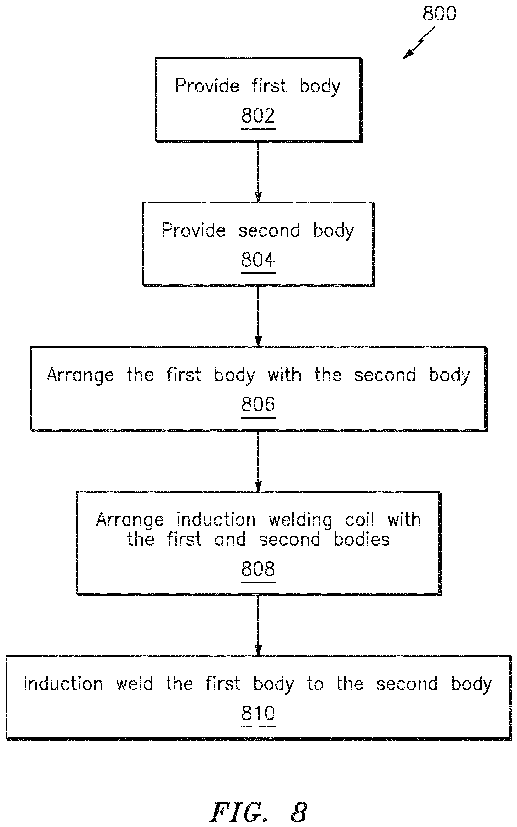

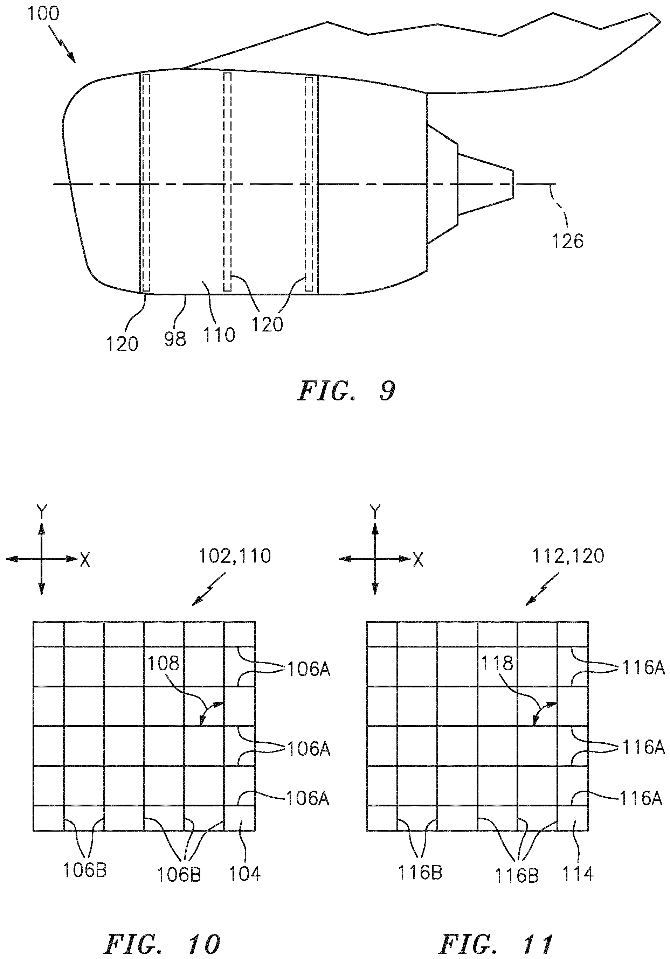

FIG. 8 is a flow diagram of a method 800 for manufacturing a component. Referring to FIG. 9, an example of the component is a fan cowl 98 for a nacelle of an aircraft propulsion system 100. The component, however, may alternatively be configured as or may otherwise be included as part of another nacelle component, an aircraft control surface, a wing or an aircraft fuselage. The present disclosure, however, is not limited to manufacturing such exemplary components or to aircraft propulsion system applications. For example, the method 800 may be performed for manufacturing any type or configuration of component where two or more bodies are joined via induction welding.

In step 802, a first body 102 is provided as shown, for example, in FIG. 10. This first body 102 may be configured as a thermoplastic body. The first body 102 of FIG. 10, for example, includes fiber reinforcement (e.g., embedded) within a thermoplastic matrix 104. The fiber reinforcement may be or otherwise include carbon fibers; however, the present disclosure is not limited thereto. The fiber reinforcement may include one or more first fibers 106A and one or more second fibers 106B. The first fibers 106A may be arranged at least substantially (e.g., +/- 1° or 2°) or exactly parallel with one another. The second fibers 106B may be arranged at least substantially (e.g., +/- 1° or 2°) or exactly parallel with one another. The second fibers 106B may also be angularly offset from the first fibers 106A. Each second fiber 106B of FIG. 10, for example, is angularly offset from each first fiber 106A by an angle 108; e.g., a right angle (90°), or alternatively an acute angle or an obtuse angle. The first fibers 106A and the second fibers 106B, for example, may be woven together. The present disclosure, however, is not limited to such an exemplary fiber reinforcement arrangement.

The first body 102 may be configured as a skin of the component. For example, referring to FIG. 9, the first body 102 may be configured as an exterior skin 110 (e.g., exterior layer) of the fan cowl 98.

In step 804, a second body 112 is provided as shown, for example, in FIG. 11. This second body 112 may be configured as a thermoplastic body. The second body 112 of FIG. 11, for example, includes fiber reinforcement (e.g., embedded) within a thermoplastic matrix 114. The second body fiber reinforcement material may be the same (or different than) the first body fiber reinforcement material. The fiber reinforcement may be or otherwise include carbon fibers; however, the present disclosure is not limited thereto. The fiber reinforcement may include one or more first fibers 116A and one or more second fibers 116B. The first fibers 116A may be arranged at least substantially (e.g., +/- 1° or 2°) or exactly parallel with one another. The second fibers 116B may be arranged at least substantially (e.g., +/- 1° or 2°) or exactly parallel with one another. The second fibers 116B may also be angularly offset from the first fibers 116A. Each second fiber 116B of FIG. 11, for example, is angularly offset from each first fiber 116A by an angle 118; e.g., a right angle (90°), or alternatively an acute angle or an obtuse angle. The first fibers 116A and the second fibers 116B, for example, may be woven together. The present disclosure, however, is not limited to such an exemplary fiber reinforcement arrangement. The second body thermoplastic matrix material may be the same (or different than) the first body thermoplastic matrix material.

The second body 112 may be configured as a structural reinforcement of the component. For example, referring to FIG. 9, the second body 112 may be configured as one of a plurality of structural reinforcements 120 of the fan cowl 98, which structural reinforcements 120 are arranged on an interior side of the fan cowl 98 and, thus, below (e.g., radially within) the exterior skin 110 of FIG. 9. Examples of the structural reinforcements 120 include, but are not limited to, a stiffener, a rib, a flange, etc.

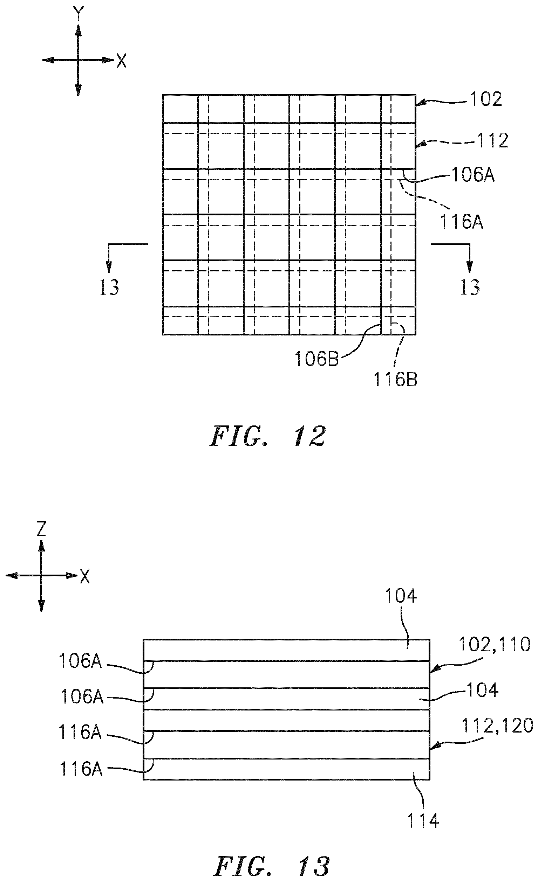

In step 806, the first body 102 is arranged with the second body 112 as shown, for example, in FIGS. 12 and 13. In this arrangement, the second body 112 is next to and engages (e.g., contacts) the first body 102. The first fibers 106A in the first body 102 may be arranged at least substantially (e.g., +/- 1° or 2°) or exactly parallel with the first fibers 116A in the second body 112. The second fibers 106B in the first body 102 may be arranged at least substantially (e.g., +/- 1° or 2°) or exactly parallel with the second fibers 116B in the second body 112. However, in other embodiments, one or more of these fibers 106A and 116A, 106B and 116B may be respectively angularly offset from one another.

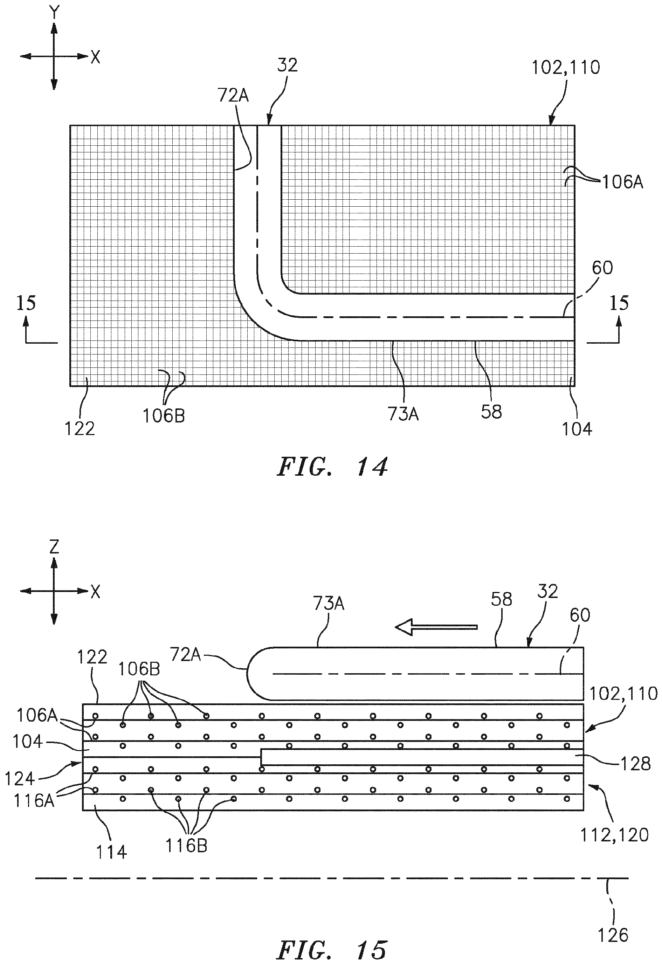

In step 808, the induction welding coil 32 is arranged with the first body 102 and the second body 112. For example, referring to FIGS. 14 and 15, the conductive element 58 is disposed next to an exterior surface 122 of the first body 102; e.g., an exterior surface of the fan cowl 98. The conductive element 58 may engage (e.g., contact) the first body 102. Alternatively, the conductive element 58 may be displaced from the first body 102 by a small gap; e.g., an air gap. One or more or all of the first segments (e.g., 68, 70A, 72A, 70B and 72B; see FIG. 4) may be arranged at least substantially (e.g., +/- 1° or 2°) or exactly parallel with at least some of the fibers 106B in the first body 102 and/or at least some of the fibers 116B in the second body 112 (see FIG. 11 and 12). One or more or all of the second segments (e.g., 71A, 73A, 71B and 73B; see FIG. 4) may be arranged at least substantially (e.g., +/- 1° or 2°) or exactly parallel with at least some of the fibers 106A in the first body 102 and/or at least some of the fibers 116A in the second body 112.

In step 810, the first body 102 is induction welded to the second body 112 using the induction welding coil 32. The power source 22 (see FIG. 1), for example, may provide a high frequency (e.g., alternating) current to the induction welding coil 32. The induction welding coil 32 may subsequently generate electromagnetic waves which excite one or more of the reinforcement fibers (e.g., 106A and/or 106B) via eddy currents within the first body 102 and/or the one or more of the reinforcement fibers (e.g., 116 and/or 116B) via eddy currents within the second body 112. This excitation may elevate a temperature of the first body 102 and/or the second body 112 to a melting point temperature where the thermoplastic matrix 104 of the first body 102 and/or the thermoplastic matrix 114 of the second body 112 melts. A melt layer may form at an interface 124 between the first body 102 and the second body 112. This melt layer may bond the first body 102 and the second body 112 together upon cooling thereof. The induction welding coil 32 may be moved longitudinally (e.g., in the x-axis direction and/or circumferentially about a centerline 126 of the body (see FIG. 9)) to provide an elongated welded seam 128 between the first body 102 and the second body 112.

During the induction welding of the first and the second bodies 102 and 112, the cooling device 24 of FIG. 1 may flow coolant through the induction coil assembly 26. The cooling device 24 of FIG. 1, for example, may flow (e.g., circulate) the coolant sequentially through the first lead 28, the induction welding coil 32 and the second lead 30, or vice versa. Flowing of the coolant reduces the temperature of the induction welding coil 32 such that, for example, heat radiated from the induction welding coil 32 does not melt the thermoplastic matrix 104 of the adjacent first body 102 (see FIGS. 14 and 15).

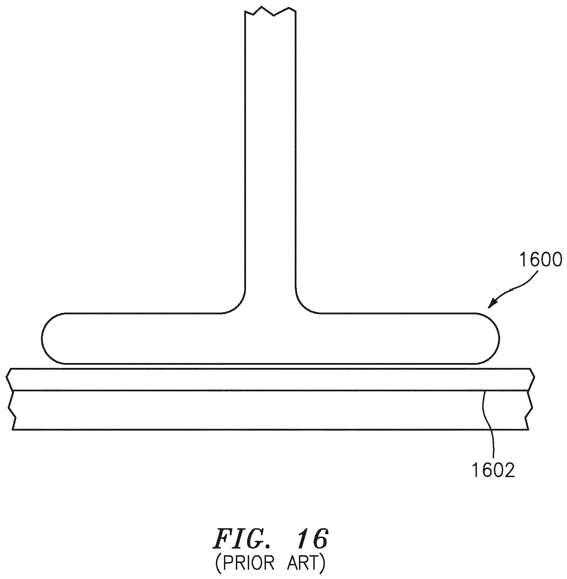

Referring to FIGS. 14 and 15, the induction welding coil 32 of the present disclosure is configured to produce a relatively wide weld seam 128 between the first body 102 and the second body 112. For example, each segment (e.g., 68, 70A-73A and 70B-73B; see FIG. 4) of the induction welding coil 32 may be aligned with a respective fiber or fibers (e.g., 106A and/or 106B) within the first body 102 and/or a respective fiber or fibers (e.g., 116A and/or 116B) within the second body 112. Each coil segment may thereby be associated with and excite its own respective fiber(s). Furthermore, the induction welding coil 32 can excite both the first fibers 106A, 116A and the second fibers 106B, 116B within the first body 102 and/or the second body 112 simultaneously. By contrast, a single hairpin coil 1600 as shown in FIG. 16 will primarily only excite an aligned and parallel fiber 1602 of fibers. Thus, such a single hairpin coil 1600 will provide a relatively thin and weak weld seam after a single longitudinal pass.

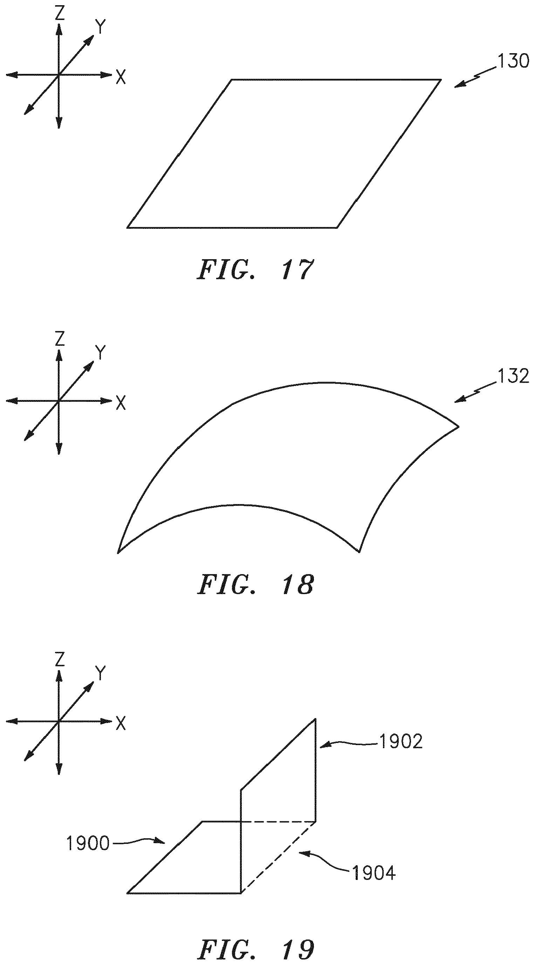

In some embodiments, referring to FIG. 17, the common plane described above may be configured as a flat plane 130. In other embodiments, referring to FIG. 18, the common plane may alternatively be configured as a non-flat plane 132 such as, but not limited to, a (e.g., constant radius or changing radius) curved plane, a concave plane or a convex plane. The induction welding coil 32 (see FIG. 4) may thereby follow a shape of, for example, a curved panel. The common plane, however, does not have a geometry with any interruptions such as, but not limited to, an intersection (e.g., a corner, a crease, etc.) between two different (e.g., flat, curved, etc.) planes. For example, referring to FIG. 19, two different planes 1900 and 1902 are separated by an interruption 1904; e.g., a corner. The planes 1900 and 1902 of FIG. 19 therefore are not considered to collectively form a common plane. Of course, in other embodiments, the induction welding coil of the present disclosure may alternatively be configured within and/or along two or more intersecting planes.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An induction welder (20), comprising:
a first lead (28);
a second lead (30); and
an induction welding coil (32) electrically coupled with the first lead (28) and the second lead (30), the induction welding coil (32) comprising a conductive element (58) configured into at least a plurality of loops (62A, 62B) arranged within a common plane.

2. The induction welder (20) of claim 1, wherein:
the first lead (28) comprises a first lead tube;
the second lead (30) comprises a second lead tube; and
the conductive element (58) comprises a coil tube connected to and extending between the first lead tube and the second lead tube.

3. The induction welder (20) of claim 2, wherein:
the first lead tube has a first width (44);
the second lead tube has a second width (56); and
the coil tube has a third width (66) that is smaller than at least one of the first width (44) or the second width (56).

4. The induction welder (20) of claim 2 or 3, further comprising a cooling device (24) configured to flow cooling fluid sequentially through the first lead tube, the coil tube and the second lead tube.

5. The induction welder (20) of any preceding claim, wherein the plurality of loops (62A, 62B) include a first loop (62A) and a second loop (62B) arranged next to the first loop (62A) within the common plane, and, optionally, the first loop (62A) is connected to the second loop (62B) by a bridge segment (68) of the conductive element (58) that is arranged within the common plane.

6. The induction welder (20) of any preceding claim, wherein a first of the plurality of loops has a polygonal shape.

7. The induction welder (20) of any preceding claim, wherein:
an entirety of at least a portion of the conductive element (58) is arranged within the common plane, and the portion of the conductive element (58) includes a plurality of first segments (70A, 72A, 70B, 72B) and a plurality of second segments (71A, 73A, 71B and 73B);
the plurality of first segments (70A, 72A, 70B, 72B) are parallel with one another;
the plurality of second segments (71A, 73A, 71B and 73B) are parallel with one another; and
each of the plurality of second segments (71A, 73A, 71B and 73B) is angularly offset from each of the plurality of first segments (70A, 72A, 70B, 72B).

8. The induction welder (20) of any preceding claim, wherein a first of the plurality of loops (62A) includes:
a first coil first segment (70A), a first coil second segment (71A), a first coil third segment (72A) and a first coil fourth segment (73A);
the first coil first segment (70A) electrically coupling the first lead (28) with the first coil second segment (71A);
the first coil second segment (71A) extending between and angularly offset from the first coil first segment (70A) and the first coil third segment (72A);
the first coil third segment (72A) between and connected to the first coil second segment (71A) and the first coil fourth segment (73A); and
the first coil fourth segment (73A) angularly offset from the first coil third segment (72A).

9. The induction welder (20) of claim 8, wherein at least one of:
the first coil first segment (70A) is parallel with the first coil third segment (72A);
the first coil second segment (71A) is parallel with the first coil fourth segment (73A);
a length (76A) of the first coil first segment (70A) is less than a length (82A) of the first coil third segment (72A); and/or
a length (78A) of the first coil second segment (71A) is less than a length (86A) of the first coil fourth segment (73A).

10. The induction welder (20) of claim 8 or 9, wherein:
a second of the plurality of loops (62B) includes:
a second coil first segment (70B), a second coil second segment (71B), a second coil third segment (72B) and a second coil fourth segment (73B);
the second coil first segment (70B) electrically coupling the second lead (30) with the second coil second segment (71B);
the second coil second segment (71B) extending between and angularly offset from the second coil first segment (70B) and the second coil third segment (72B);
the second coil third segment (72B) between and connected to the second coil second segment (71B) and the second coil fourth segment (73B); and
the second coil fourth segment (73B) angularly offset from the second coil third segment (72B); and
a bridge segment (68) connects the first coil fourth segment (73A) to the second coil fourth segment (73B), and, optionally, the bridge segment (68) is between and next to the first coil first segment (70A) and the second coil first segment (70B).

11. The induction welder (20) of any preceding claim, further comprising a power source (22) electrically coupled with the first lead (28) and the second lead (30).

12. An induction welder (20), comprising:
a first lead (28);
a second lead (30); and
an induction welding coil (32) electrically coupled with the first lead (28) and the second lead (30), the induction welding coil (32) comprising a conductive element (58);
an entirety of at least a portion of the conductive element (58) lying along a plane, the portion of the conductive element (58) including a plurality of first segments (70A, 72A, 70B, 72B) and a plurality of second segments (71A, 73A, 71B, 73B), the plurality of first segments (70A, 72A, 70B, 72B) parallel with one another, the plurality of second segments (71A, 73A, 71B, 73B) parallel with one another, and each of the plurality of second segments (71A, 73A, 71B, 73B) angularly offset from each of the plurality of first segments (70A, 72A, 70B, 72B).

13. The induction welder (20) of claim 12, wherein at least one of:
the plurality of first segments (70A, 72A, 70B, 72B) includes at least three of the first segments;
the plurality of second segments (71A, 73A, 71B, 73B) includes at least three of the second segments; and/or
each of the plurality of second segments (71A, 73A, 71B, 73B) is perpendicular to each of the plurality of first segments (70A, 72A, 70B, 72B).

14. A manufacturing method, comprising:
arranging a first thermoplastic body (102) with a second thermoplastic body (112), wherein at least one of the first thermoplastic body (102) or the second thermoplastic body (112) includes a plurality of fibers embedded within a thermoplastic matrix (104, 114), and the plurality of fibers include a plurality of parallel first fibers (106A, 116A) and a plurality of parallel second fibers (106B, 116B) that are angularly offset from the plurality of parallel first fibers (106A, 116A);
arranging a conductive element (58) next to a surface (122) of the first thermoplastic body (102); and
induction welding the first thermoplastic body (102) to the second thermoplastic body (112) using the conductive element (58), wherein the conductive element (58) includes a first segment and a second segment, the first segment is at least substantially parallel with the plurality of parallel first fibers (106A, 116A), and the second segment is at least substantially parallel with the plurality of parallel second fibers (106B, 116B).

15. The manufacturing method of claim 14, wherein:
the first segment is perpendicular to the second segment; and/or
the conductive element (58) is configured into at least a plurality of loops (62A, 62B) arranged within a common plane that is at least substantially parallel with the surface (122).
